# EUROPEAN PATENT APPLICATION

(11) **EP 2 589 708 A1**
(43) Date of publication of application: **08.05.2013**
(21) Application number: 10854133.5
(22) Date of filing: 29.06.2010
(51) Int. Cl.: E02F 9/16, B60R 16/02, B62D 33/06

(54) **WATERPROOF GROMMET FOR A CAB ROOF OF CONSTRUCTION MACHINERY**

(71) Applicant: Volvo Construction Equipment AB, 631 85 Eskilstuna (SE)
(72) Inventor: LEE, Se-Jo, Gimhae-si Gyeongsangnam-do 621-721 (KR)
(74) Representative: Zimmermann, Tankred Klaus
(86) International application number: PCT/KR2010/004193
(87) International publication number: WO 2012/002587

(57) **Abstract**

A waterproof grommet mounted on a cab of a construction machine is provided, which includes a main body having a cable connection path formed therein and being bent to prevent an inflow of rainwater into the cab, a support plate inserted into and engaged with one side of the cab to support the main body, and a reinforcement rib formed at an end portion of an outer surface of the main body.

## Description

### TECHNICAL FIELD

The present invention relates to a waterproof grommet for a cab roof of construction machinery. More particularly, the present invention relates to a waterproof grommet for a cab loop of a construction machine, which is mounted on the cab loop of the construction machine to prevent an inflow of rainwater into a cab.

### BACKGROUND ART

In general, a wire or a tube is installed in a hole that is formed on a cab panel of a construction machine to enable inside and outside portions of the cab to communicate with each other, and a grommet is mounted thereon to prevent leakage of water.

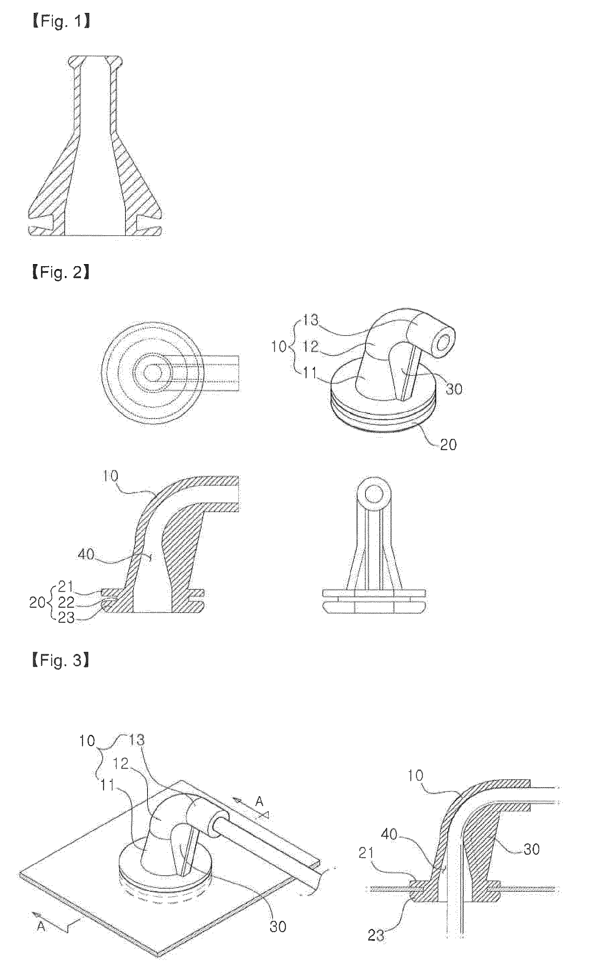

As shown in Fig. 1, the grommet is configured so that a groove is formed around an outer periphery of a grommet body that has an insertion hole formed thereon with the same diameter as a wire or a tube, and the grommet body is inserted into a hole that is formed on a cab panel to be fixed to the cab panel.

The grommet in the related art illustrated in Fig. 1 has the problem that a wire projection portion is vertically formed and thus dropping rainwater may flow into the cab.

Further, due to elasticity of the projected wire, the grommet may get bent to cause the occurrence of a gap between the grommet and the projected wire, and the rainwater may flow through the gap.

Further, since the shape of the groove formed on the grommet is not in completely close contact with the cab panel, the rainwater may flow through the groove.

### DISCLOSURE

### TECHNICAL PROBLEM

Therefore, the present invention has been made to solve the above-mentioned problems occurring in the related art, and one embodiment of the present invention is related to prevention of rainwater from permeating through forming of a grommet body in a curved shape and prevention of the grommet from becoming bent and damaged due to bending of a wire through forming of a reinforcement rib on a curved portion.

### TECHNICAL SOLUTION

In accordance with an aspect of the present invention, there is provided a waterproof grommet mounted on a cab of a construction machine, which includes a main body having a cable connection path formed therein and being bent to prevent an inflow of rainwater into the cab; a support plate inserted into and engaged with one side of the cab to support the main body; and a reinforcement rib formed at an end portion of an outer surface of the main body.

### ADVANTAGEOUS EFFECT

According to an embodiment of the present invention as described above, first, the grommet body is formed in a curved shape, and thus the inflow of rainwater through a hole portion, which a wire passes through, of the grommet mounted on the upper end surface of the cab loop can be effectively prevented.

Second, since the reinforcement rib is provided on the grommet body, the grommet body is prevented from being bent due to the elasticity of the wire, and thus the grommet body can be maintained in the curved shape.

### BRIEF DESCRIPTION OF THE DRAWINGS

The above objects, other features and advantages of the present invention will become more apparent by describing the preferred embodiments thereof with reference to the accompanying drawings, in which:
Fig. 1 is a cross-sectional view of a grommet in the related art;
Fig. 2 shows a perspective view, a front view, a plan view, and a cross-sectional view illustrating a grommet according to an embodiment of the present invention; and
Fig. 3 shows a three-dimensional view and a cross-sectional view illustrating an example of actual application of a grommet.

### * Description of Reference Numerals in the Drawing

| | |
|---|---|
| 10: | body |
| 11: | vertical pipe |
| 12: | bent pipe |
| 13: | horizontal pipe |
| 20: | support plate |
| 21: | first plate |
| 22: | second plate |
| 23: | third plate |
| 30: | reinforcement rib |
| 40: | cable connection path |

### BEST MODE

Now, a waterproof grommet mounted on a cab loop of a construction machine according to a preferred embodiment of the present invention will be described in detail with reference to the accompanying drawings. In the drawings, thicknesses of lines and sizes of constituent elements may be exaggerated for clarity and convenience in explanation.

Further, wordings to be described later are defined in consideration of the functions of the present invention, and may differ depending on the intentions of a user or an operator or custom. Accordingly, such wordings should be defined on the basis of the contents of the overall specification.

In addition, the embodiment disclosed hereinafter does not limit the scope of the present invention, but corresponds to merely exemplary terms of constituent elements presented in claims of the present invention, and the embodiments that include replaceable constituent elements as equivalents of the constituent elements defined in the overall specification and claims may be included in the scope of the present invention.

Fig. 1 is a cross-sectional view of a grommet in the related art. Fig. 2 shows a perspective view, a front view, a plan view, and a cross-sectional view illustrating a grommet according to an embodiment of the present invention, and Fig. 3 shows a three-dimensional view and a cross-sectional view illustrating an example of actual application of a grommet.

A waterproof grommet for a cab loop of a construction machine, which is mounted on a cab of the construction machine, according to a preferred embodiment of the present invention includes a main body 10 having a cable connection path 40 formed therein and being bent to prevent an inflow of rainwater into the cab, a support plate 20 inserted into and engaged with one side of the cab to support the main body 10, and a reinforcement rib 30 formed at an end portion of an outer surface of the main body 10.

As shown in Fig. 2, the grommet according to the present invention includes the main body 10, the support plate 20, and the reinforcement rib 30.

The cable connection path 40 for accommodating a cable is formed in the main body 10. Although the grommet in the related art is vertically formed on the while, the grommet according to the present invention is in a curved shape. Since the main body 10 is bent in the curved shape, vertically dropping rainwater is effectively prevented from flowing into the cab.

The support plate 20 for supporting the main body 10 is provided under the main body 10. The support plate 20 is inserted into one side of the cab to support the main body 10. That is, the support plate 20 is configured to be inserted into a groove formed on a loop panel.

The reinforcement rib 30 is provided at the end portion of the outer surface of the main body 10. Since the reinforcement rib 30 is configured to maintain the shape of the bent main body 10 as it is, it is preferable that the reinforcement rib 30 is formed on a portion, where the bending occurs most easily, of the outer surface of the main body 10.

In the waterproof grommet according to a preferred embodiment of the present invention, the support plate 20 includes a first plate 21 extending from a lower end of the main body 10 and having a cross section that is wider than a cross section of the main body 10; a second plate 22 located below the first plate 21 and having a cross section that is narrower than the cross section of the first plate 21; and a third plate 23 located below the second plate 22, having an inclined circumferential cross section, and having the same cross section as the first plate 21.

As shown in Fig. 2, the support plate 20 includes the first plate 21, the second plate 22, and the third plate 23.

The first plate 21 extends from the lower end of the main body 10, has the cross section that is wider than the cross section of the main body 10, and is generally in a cylinder shape. The cable connection path 40 is formed to extend from the inside of the first plate 21.

The second plate 22 is located below the first plate 21, and has the cross section that is narrower than the cross section of the first plate 21. In the same manner as the first plate 21, the same cable connection path 40 is formed to extend from the inside of the second plate 21, and the second plate 22 is generally in a cylinder shape.

The third plate 23 is located below the second plate 22, and has the cross section that is equal to the cross section of the first plate 21. In the same manner as the first plate 21 and the second plate 22, the same cable connection path 40 is formed to extend from the inside of the third plate 23, and the third plate 23 is generally in a cylinder shape.

The circumferential cross section of the third plate 23 is inclined. Accordingly, the grommet can be easily engaged with the loop of the construction machine in comparison to a case where the circumferential cross section of the third plate 23 is perpendicularly formed.

In the case where the grommet in the related art is engaged with the hole formed on the loop panel, the grommet is unable to be in completely close contact with the loop panel. By contrast, according to the present invention, the groove that is formed by end portions of the first plate 21, the second plate 22, and the third plate 23 is in completely close contact with the hole of the loop panel, complete waterproofing can be achieved.

Further, the movement of the grommet due to vibration of the machine can be prevented by additionally providing a friction material on a portion where the groove formed by the end portions of the first plate 21, the second plate 22, and the third plate 23 is in completely close contact with the hole of the loop panel. In this case, the friction material secondarily prevents the inflow of the rainwater. In order to obtain the same effect, an uneven portion may be added to the end portions of the first plate 21, the second plate 22, and the third plate 23 instead of the friction material.

It is preferable that the first plate 21, the second plate 22, and the third plate 23 are integrally formed.

In the waterproof grommet according to the preferred embodiment of the present invention, the main body 10 includes a vertical pipe 11 formed to extend from the support plate 20 and having a cross section that becomes narrower in an upward direction, a bent pipe 12 extending from the vertical pipe 11 to be bent, and a horizontal pipe 13 extending from the bent pipe 12 to be horizontally formed.

As shown in Fig. 2, the main body 10 includes the vertical pipe 11, the bent pipe 12, and the horizontal pipe 13.

The vertical pipe 11 is a portion that is formed to extend from the support plate 20 and has the cross section that becomes narrower in the upward direction. Accordingly, the vertical pipe 11 is generally in a truncated cone shape. The cable connection path 40 that is in a truncated cone shape is provided inside the vertical pipe 11.

The bent pipe 12 is formed to extend from the vertical pipe 11. Since the bent pipe 12 is bent at a predetermined angle, the grommet is generally in the curved shape, and thus can effectively intercept the inflow of rainwater in the vertical direction. The cable connection path 40 is provided inside the bent pipe 12.

The horizontal pipe 13 is provided at the end of the bent pipe 12, and the cable connection path 40 is provided inside the horizontal pipe 13.

As a result, the horizontal pipe 13 and the bent pipe 12 have the same cross sections, and the wire that has passed through the vertical pipe 11 is bent in the horizontal pipe 13 and is exposed to outside through the bent pipe 12.

In the waterproof grommet according to the preferred embodiment of the present invention, the reinforcement rib 30 is formed to extend from the lower end of the vertical pipe 11 to the upper end of the bent pipe 12, and has an outer surface forwardly projecting in the upward direction.

As shown in Fig. 2, the reinforcement rib 30 is provided on the outer surface of the main body 10.

The grommet is in the curved shape through the bent pipe 12, and the reinforcement rib 30 serves to prevent the damage of the grommet as the wire gets easily bent.

The reinforcement rib 30 is provided at the end portion of the circumference of the main body 10. Specifically, the reinforcement rib 30 is formed with a height from the lower end of the vertical pipe 11 to the upper end of the bent pipe 12, and forwardly projects in the upward direction. Further, it is preferable that the reinforcement rib 30 is formed with a width that becomes wider in the upward direction, and this is because the bending is performed more easily as the bent portion is nearer and thus more reinforcement is required in this case.

It is preferable that the waterproof grommet is generally formed of rubber and silicon materials. The waterproof grommet that is formed of such materials has excellent durability and facilitates the assembling and disassembling thereof.

It is preferable that the support plate 20 and the main body 10 are integrally formed.

### INDUSTRIAL APPLICABILITY

As apparent from the above description, the waterproof grommet for the cab loop of the construction machine according to the present invention can be applied to the construction machinery industry fields.

## Claims

1. A waterproof grommet mounted on a cab of a construction machine, comprising:
a main body having a cable connection path formed therein and being bent to prevent an inflow of rainwater into the cab;
a support plate inserted into and engaged with one side of the cab to support the main body; and
a reinforcement rib formed at an end portion of an outer surface of the main body.

2. The waterproof grommet according to claim 1, wherein the support plate comprises:
a first plate extending from the main body and having a cross section that is wider than a cross section of the main body;
a second plate located below the first plate and having a cross section that is narrower than the cross section of the first plate; and
a third plate located below the second plate, having an inclined circumferential cross section, and having the same cross section as the first plate.

3. The waterproof grommet according to claims 1, wherein the main body comprises:
a vertical pipe formed to extend from the support plate and having a cross section that becomes narrower in an upward direction;
a bent pipe extending from the vertical pipe to be bent; and
a horizontal pipe extending from the bent pipe to be horizontally formed.

4. The waterproof grommet according to claim 1, wherein the reinforcement rib is formed from a lower end of the vertical pipe to an upper end of the bent pipe and has an outer surface forwardly protecting in an upward direction,
